# EUROPEAN PATENT SPECIFICATION

(11) **EP 3 995 684 B1**
(45) Date of publication and mention of the grant of the patent: **08.04.2026**
(21) Application number: 21206694.8
(22) Date of filing: 05.11.2021
(51) Int. Cl.: F02D 41/02, F02D 29/04, A01B 67/00, F02D 31/00, B60W 30/188

(54) **ENGINE CONTROL METHOD OF AN AGRICULTURAL VEHICLE**
MOTORSTEUERUNGSVERFAHREN FÜR EIN LANDWIRTSCHAFTLICHES FAHRZEUG
PROCÉDÉ DE COMMANDE DE MOTEUR D'UN VÉHICULE AGRICOLE

(30) Priority: 06.11.2020 IT 202000026602
(43) Date of publication of application: 11.05.2022
(73) Proprietor: CNH Industrial Italia S.p.A., 10156 Torino (IT)
(72) Inventor: Berselli, Alberto, 41043 Modena (IT); Fiorati, Stefano, 44028 Poggio Renatico (Ferrara) (IT); Lenzini, Nicola, 41027 Pievepelago (IT); Morandi, Gabriele, 41125 Modena (IT); Petrigliano, Rocco, 75029 Valsinni (IT)
(74) Representative: CNH Industrial IP Department

(56) References cited:
- EP-A1- 2 183 955
- EP-A1- 3 228 182
- EP-A1- 3 398 427
- CH-A1- 706 519
- DE-A1- 102004 039 756

## Description

### Field of the invention

The present invention relates to the field of engine control strategies and engine control systems, in particular to compensate resistant torque peaks generated by a baler based on a compressor piston arranged to compress forage to form bales.

### State of the art

Agricultural vehicles, tractors, are designed to drive operating machines, operatively connected to the PTO power take-off of the prime mover of the agricultural machine.

The prime mover must therefore simultaneously provide the torque necessary for the advancement of the agricultural vehicle and for the operation of the operating machine connected to it.

Some operating machines include hydraulic organs that perform movements coordinated with the operations performed, therefore the prime mover supplies the machine with a torque with moderate fluctuations.

There are operating machines which perform the function of press, typically for packing, and which generally comprise a crank mechanism, which activates a piston intended to press a material. They are characterized by peaks of resistant torque of considerable intensity with a marked periodicity that induce the prime mover to noticeable slowdowns.

In the case of the baler machine, the frequency of the crushing movements of the straw is approximately pre-ordered.

Furthermore, the resisting torque supplied to the prime mover in each repetition is so significant that the relative vehicle slows down with an overall advancement substantially in fits and starts, since the transmission is unable to react promptly to such variations in the speed rotation of the prime mover.

This behaviour, as well as being uncomfortable for the operator, appears to have repercussions on the entire driveline of the vehicle subject to repeated jerks.

It should be considered that agricultural vehicles are speed-controlled in order to properly drive the operating machines connected to them. This means that the operator sets a predetermined speed of rotation of the vehicle's engine and then an engine control unit adjusts the fuel injection necessary to provide a drive torque such as to maintain the predetermined speed of rotation of the engine. This method of control is very similar to that of cars and heavy vehicles equipped with "cruise control", but bearing in mind that the position of the accelerator lever of an agricultural vehicle indicates a speed of rotation of the prime mover even in transient, that is when the operator acts on the same lever.

EP3398427 desloses a solution according to which a CVT is interposed between the PTO of the agricultural vehicle and the baler. According to EP3398427 the resistant torque peaks offered by the packing machine are recognized in various ways, for example by means of a sensor connected to the PTO or a load cell associated with the packing machine in order to obtain a "historical" trend of the resistant torque peaks. On the basis of this historical trend, a transmission ratio profile is calculated to compensate for the peaks of resistant torque.

This solution provides for the preparation of a CVT which represents an additional component that can lead to additional malfunctions at the expense of the reliability of the system including the agricultural vehicle and the baler.

Further alternative solutions to compensate torque fluctuations of an agricultural machine are disclosed in CH706519A1 and EP3228182A1.

If not specifically excluded in the detailed description below, what is described in this chapter is to be considered as an integral part of the detailed description.

### Summary of the invention

The purpose of the present invention is to limit the effects deriving from the PTO drive of an operating machine characterized by periodic peaks of significant intensity of resistant torque offered to the PTO.

More specifically, an object of the present invention is to limit the effects deriving from the operation of a baler machine.

The basic idea of the present invention is to automatically request a temporary increase in the rotation speed of the prime mover approximately in time correspondence with the resistive torque pulses generated by the operating machine, so as to at least partially compensate for the reduction in the rotation speed of the prime mover caused by the same pulses of resistant torque.

It is evident that the peaks follow one another in succession over a prolonged time and after a first phase in which the frequency and phase of the succession of peaks is detected, the compensation is implemented, while continuing to monitor the same peaks to possibly correct the frequency and phase necessary to predict the future instants of application of a temporary increase in the speed of rotation of the prime mover, approximately contemporaneous with the future peaks of resistant torque.

Therefore, the present invention provides for
- a first process of detecting a succession of resistant torque peaks applied to a PTO of the agricultural vehicle and calculation of a frequency (f) and phase (φ) of said sequence in such a way to predict a first future succession of peaks of resistant torque,
- a second process of compensation, at least partially, of future peaks of resistant torque by generating a future succession of requests for temporary increase in a rotation speed of the motor approximately contemporaneous with said future peaks of resistant torque.

Absolute contemporaneity cannot be ensured due to a certain variability of the disturbance, which is discussed extensively below, therefore the compensation is only "approximately" contemporary or synchronous.

Preferably, the speed increase required from the prime mover has an approximately step-like trend with a rising edge that precedes an expected instant of application of an impulse resistant torque and a falling edge arranged around the same expected instant.

Advantageously, the inertia of the vehicle including its prime mover, typically internal combustion, is exploited to cope with each peak of resistant torque.

The inertia of the prime mover is evaluated both in mechanical terms and in terms of the relative dynamics of the prime mover rotation speed control.

It is worth highlighting that this strategy is fully implemented in a processing unit on board the vehicle, which autonomously recognizes the periodicity of the resistant torque pulses offered by the operating machine connected to the vehicle's PTO.

The recognition of resistant torque peaks can be performed in many ways, for example by means of sensors applied to the transmission, as described in EP3398427, or by monitoring the number of engine revolutions.

It is worth highlighting that the so-called phonic wheel is always present and associated with the internal combustion engine of the agricultural vehicle to monitor the rotation speed of the engine itself.

The features recited in the independent claims define the embodiment of the present invention.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figure 1 shows a block diagram representative of two parallel processes, in which the second depends works on parameters provided by the first;
Figure 2 shows a time diagram showing variations in speed of the prime mover controlled by the method of the present invention with reference to expected events of resistant torque pulses applied to the prime mover by means of the relative PTO;

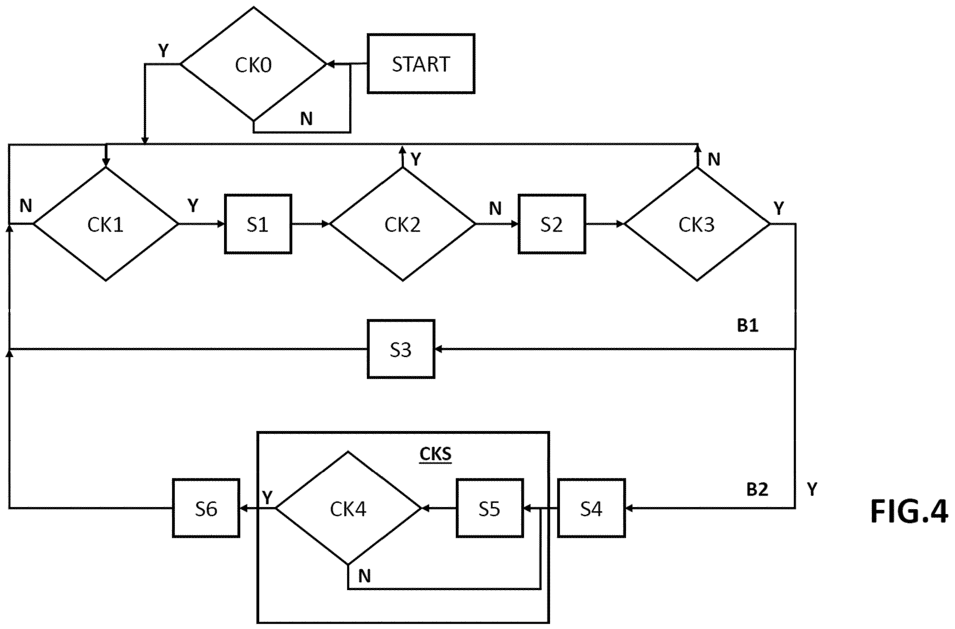

Figures 3 - 5 show flowchart representative of embodiment examples of the method object of the present invention;

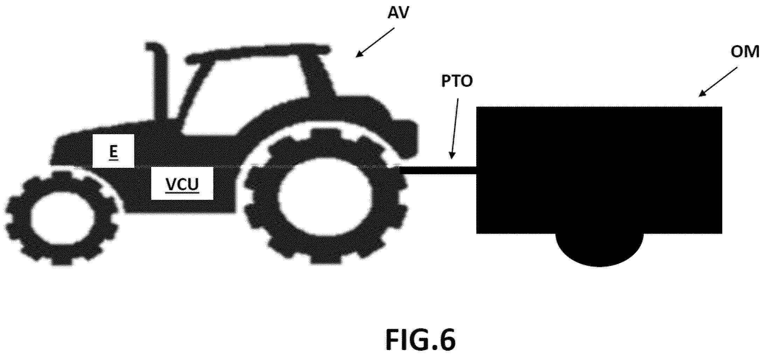

Figure 6 shows an agricultural vehicle to which a baler implementing the method object of the present invention is connected.

The blocks shown with a discontinuous line are to be considered optional.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

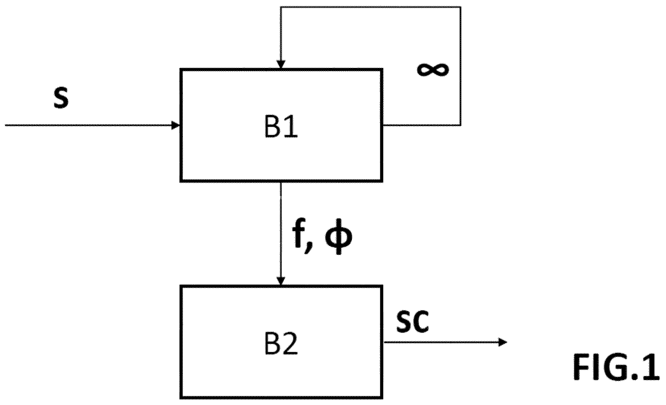

With reference to Figure 1, the first process indicated as B1 deals with detecting frequency f and phase φ of a train of resistant torque pulses applied to the prime mover by means of the relative PTO.

A classic electronic circuit that returns the frequency and phase of a periodic signal is a Phase-locked loop (PLL).

The phase, obviously, is calculated with respect to an instant in time in which the observation process begins.

The purpose, of course, is to predict future peaks of resistant torque in order to compensate for them.

After obtaining a fair synchronization with the representative signal of the resistant torque peak train, the time reference system can be shifted so that the phase is zero.

In any case, when it is decided to synchronize two processes with each other, the fact of knowing the phase, with respect to the time reference system of one of the two systems, is relevant and implicit.

There are many ways to obtain the frequency of the resistive torque peaks train. Sensors can be arranged to obtain the signal representative of the peak train, for example, a load cell associated with the piston rod of the baler, or a torque sensor associated with the PTO or the phonic wheel associated with the flywheel of the internal combustion engine.

From the knowledge of the frequency it is possible to predict the instants in which, in the future, peaks of resistant torque will be generated.

Since the same EP3398427 shows different ways to obtain the "history" of the resisting torque pulses, further ways to be able to carry out the first process B1 are within the capabilities of the person skilled in the art.

The present invention shares with EP3398427 only the prediction of future resistant torque peaks on the basis of their historical observation.

According to a preferred variant of the invention, the first process calculates these parameters (frequency and phase) of the disturbance generated by the operating machine OM connected to the PTO on the basis of the rotation speed signal s of the prime mover E and/or on the basis of a sensor of torque (not shown) associated with the PTO.

The second process B2 of Figure 1 receives in input the parameters calculated by the first process and generates a second train of temporarily sc requests of positive speed increase sr of the prime motor E.

For the second process to be effective, the second train must be synchronous with the first train, so that the second train at least partially compensates for the first train. Each request to increase the speed of rotation of the prime mover which starts before the instant FP of prediction of the next peak of resistant torque and ends in a around the instant of prediction, that is to say before, at or after the same instant in which the occurrence of a next resistant torque impulse is expected.

The concept of "just before" implies a certain time advance TM of a temporary request sc to increase the rotation speed, considering
- The constancy of the frequency of the disturbance,
- The mechanical inertia of the whole given by the vehicle and the operating machine associated with it,
- The dynamics of prime mover control,
which takes the form of an increase in the rotation speed of the prime mover SR.

The main purpose is to reduce the effects of the impulsive application of resistant torque to the prime mover, which causes a sudden decrease in the rotational speed of the prime mover and therefore a forward speed of the vehicle, without however appreciably changing the average moving speed of the vehicle. Therefore, the request for the increase in the speed of rotation of the prime mover is preferably made by means of a step that has a rising edge that precedes the instant of prediction of a next FP impulse of resistant torque.

Contrary to EP3398427, there is no variation of a profile of the transmission ratio between the prime mover and the baler. Preferably, between the crankshaft of the prime mover and the connecting rod there is no CVT and therefore the transmission ratio between the crankshaft of the prime mover and the propeller shaft of the packing machine is fixed. According to the present invention, the compensation process exclusively involves the fuel system of the internal combustion engine E.

In particular, the processing unit is configured to control the power supply of the prime mover, i.e. an internal combustion engine and therefore, thanks to the present invention, the power profile of the internal combustion engine is modified to counteract the peaks of negative torque offered by the baler.

Generally, the fuel system of the internal combustion engine comprises a high pressure pump and a fuel injection system in the cylinders of the internal combustion engine.

Ideally, the increase in motor rotation speed is a perfectly simultaneous impulse and of an amplitude equal to the reduction in motor speed following the application of resistant torque by the operating machine, but due to the uncertainty factors listed above the request of temporary increase of the motor rotation speed has a more or less marked step trend, "approximately simultaneous".

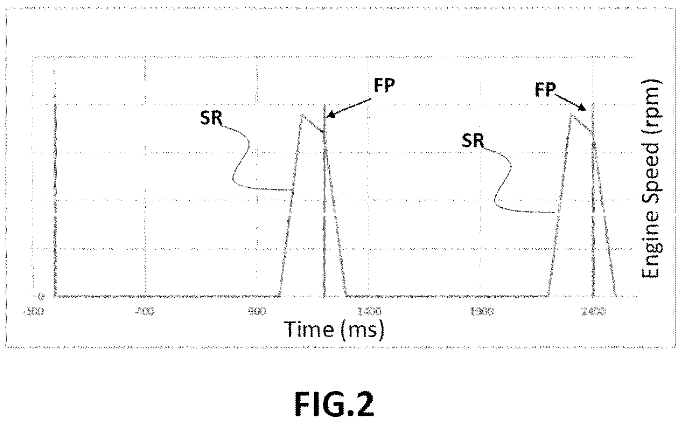

Figure 2 shows an example of a temporary request to increase the speed of the motor SR and the estimate of the pulses of resistant torque offered to the PTO.

As mentioned above, the increase in motor speed takes on a step waveform with a significant time amplitude when compared with the impulse generated by the baler machine. This fact depends on the variability of the frequency generated by the baler machine, which may depend on many factors, intrinsic to the baler machine, but also environmental, taking into account that the prime mover drives both the PTO and the driveline.

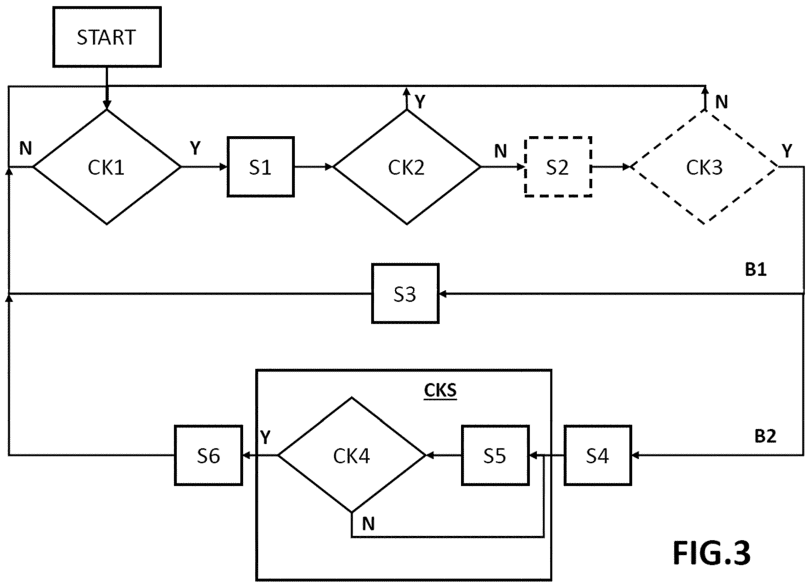

Figure 3 shows a preferred example of a flowchart representative of the two processes B1 and B2 described above.

With the initialisation (START) of the method, signals relating to the speed of the prime mover (or the AV agricultural vehicle) are acquired and/or generated by a torque sensor for
- (Check Ck1) recognition of a sudden slowdown event of the prime mover (or of the AV agricultural vehicle) with respect to an average engine rotation speed (or of teverage vehicle speed), as long as this event does not occur, this recognition step (CK1) continues to cycle (CK1 = N) on itself, while when a peak of resistant torque is recognized (CK1 = Y) the cycle is exited and immediately after
- (step S1) storing of the time instant in which the first peak of resistant torque is recognized, then
- (Check Ck2) execution of the verification if it is a first peak, in the positive case it returns to the recognition (CK1) of a further peak, while in the negative case, simultaneous execution of
- First process (B1)
   ∘ (Step S3) calculation of a moving average period between peaks and return to recognition (CK1) of a further peak;
- Second process (B2)
   ∘ (Step S4) initialization of a time interval countdown equal to the average period previously calculated,
   ∘ (CKS step) waiting for the counter to arrive at time advance TM after which,
   ∘ (Step S6) request SC for a temporary speed increase to the prime mover and return to recognition (CK1) of a further peak.

It is therefore evident that the method described is cyclic with two parallel processes, in which the second process B2 is dependent on the first.

It is also evident to those skilled person in the art that it is entirely equivalent
- to initialize the countdown to the average value of the period and request a torque increase before this is zero or
- to initialize the countdown to the average value of the period less than a time advance TM.

Obviously, further inputs can be present in the request block for increasing the motor rotation speed.

For example, the amplitude and duration of the intervention can be calculated based on the variability of the frequency of the resistant torque impulses.

Likewise, the same advance time TM can be calculated on the basis of the frequency variability of the resistant torque pulses.

It should be considered that the more variable the frequency of the resisting torque pulses, the more the base of the step of temporary request for increasing the speed of rotation of the motor must be widened, but in the same way the amplitude must be reduced, because otherwise, the average speed of advancement of the agricultural vehicle AV would be altered, taking it to a value greater than the preset one.

The value of the forward speed of the agricultural vehicle generally depends on many factors: first of all the characteristics of the operating machine towed/associated with the agricultural vehicle, secondly the torque curve of the prime mover and the type of driveline of the agricultural vehicle.

Figure 3 shows two blocks represented in hatching:
- (Step S2) calculation of the period between the last peak detected and the previous one,
- (Check CK3) verifies that the calculated period falls within a predetermined interval B.

These steps are performed before the point in the flowchart where a fork divides the first process B1 from the second process B2.

These steps have the purpose of monitoring that the period of the peaks actually indicate
- an operating machine with pre-ordered characteristics
- preordained operating conditions.

For example, the agricultural vehicle could encounter two or more obstacles that lead to respective impulses of resistant torque. Well, the algorithm described here is able to discard the torque peaks detected in such circumstances.

For example, a baler produces a peak torque train with a typical period between 1000 and 1400 ms and preferably between 1100 and 1300 ms. Therefore, considering a first peak and a consecutive second peak, if the period between them does not fall within this typical interval, the first peak is deleted/ignored.

It is worth mentioning that steps S2 and CK3 are optional. Furthermore, upstream of the first step CK1 there may be a further control CK0, see figure 3, which provides for checking the presence of a strategy activation signal.

The activation signal can be
- Always active, considering that the compensation can actually be activated only when the period between the peaks is in a predetermined interval by means of the optional steps S2, CK3,
- generated by the recognition of the connection of a pre-ordered operating machine, through the intercommunication of the operating machine with a vehicle processing unit (VCU) via a vehicle data network which is generally of the CAN type, in particular, the data communication system can be configured to detect the connection of a baler machine based on a compressor piston arranged to compress forage to form parallelepiped-shaped bales
- manually generated by the operator through a man-machine interface, such as a touch-screen display, or a button, through which the operator can set the activation of the strategy.

It is worth highlighting that, when the detection of resistant torque peaks is carried out by means of a torque sensor associated, for example, with the PTO, it remains possible to evaluate the intensity of the pulses with the same torque sensor or by evaluating the instantaneous variation of the rotation speed of the prime mover to decide whether to store the peak detection instant or discard it.

In other words, at step CK1, if each peak is detected on the basis of the rotation speed variation induced on the prime mover, the acceptance of the peak depends on its characteristics. On the other hand, the optional steps S2, CK3 allow to discard a peak if the period it defines together with the immediately following peak does not fall within the preordained interval of periods.

According to a preferred variant of the invention, the present strategy is immediately interrupted or suspended (CK6 = N), at least as regards the B2 compensation process, when the presence of a strategy inhibition signal is detected (CK5 = Y).

The inhibition signal can be one of:
- variation of the vehicle speed request,
- disconnection of the PTO,
- action on the service brake pedal,
- steering beyond a predetermined angle.

According to a preferred variant of the invention, the inhibition signal also determines the reset of the average period value calculated in step S3.

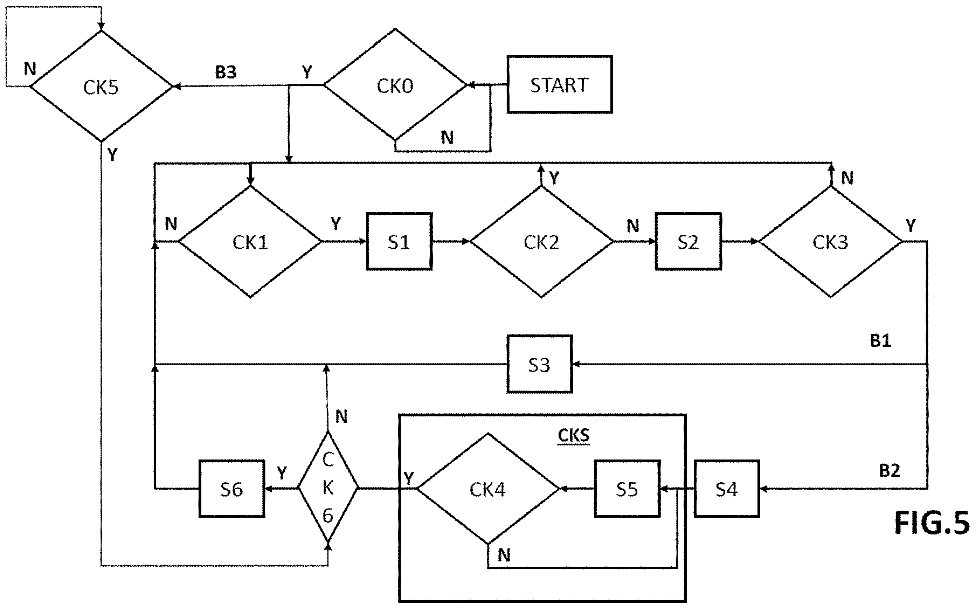

The branch B3 represented in figure 5 represents this process comprising a recursive control CK5 which, once the presence of the inhibition signal has been detected, forces the second process to skip the request for temporary increase (S6) of the rotation speed of the prime mover, by means of the control CK6 which bases its operation on the output of the recursive control CK5.

Advantageously, the present control method not only makes the use of the agricultural vehicle more comfortable, but surprisingly also leads to a certain fuel saving. This effect is probably explained by the fact that thanks to the present strategy, the average feed rate is close to the target one, which, as described above, optimizes both the operation of the operating machine and of the prime mover E which has a pre-arranged torque curve and a pre-ordered fuel consumption map.

The present invention can be advantageously carried out by means of a computer program, which comprises coding means for the realization of one or more steps of the method, when this program is executed on a computer such as for example the same processing unit VCU which oversees the management of various vehicle subsystems through the aforementioned vehicular communication network. Therefore, it is intended that the scope of protection extends to said computer program and further to computer readable means comprising a recorded message, said computer readable means comprising program coding means for carrying out one or more steps of the method. Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details. The scope of protection is defined by the following claims.

## Claims

1. Engine control method of an agricultural vehicle, wherein a baler is connected to a PTO of the vehicle, the method comprising
- a first process (B1) for detecting resistant torque peaks applied to a PTO of the agricultural vehicle and calculation of first succession of future peaks of resistant torque,
- a second process (B2) for compensating, at least partially, of said first future succession of peaks of resistant torque, by means of a second future succession of 5 requests for temporary rotation speed increase of the engine (E), wherein said second future succession is circa synchronous with respect to said first future succession;
wherein the first process (B1) comprises the following steps:
- (Check Ck1) recognition of a sudden slowdown event of the prime mover (or of the AV agricultural vehicle) with respect to an average rotation speed (or an average vehicle speed), as long as this event does not occur, this recognition step (CK1) continues to cycle (CK1 = N) on itself, while when a peak of resistant torque is recognized (CK1 = Y) the cycle is exited and immediately after
- (step S1) storing of the instant time in which the first peak of resistant torque is recognized, then
- (Check Ck2) execution of the verification if it is a first peak, in the positive case it returns to the recognition (CK1) of a further peak, while in the negative case, simultaneous execution of
- (Step S3) calculation of a moving average period between the peaks and return to recognition (CK1) of a further peak; and
- the second process (B2), wherein
Said second process (B2) includes
- (Step S4) initialization of a time interval countdown equal to the average period previously calculated reduced of a predetermined time advance (TM),
- (CKS step) waiting for the counter to arrive at zero after which, (Step S6) generating a temporary request (SC) of an increase in rotation speed to the prime mover and returning to recognition (CK1) of a further peak.

2. Method according to claim 1, wherein during said second process (B2), said first process (B1) remains active, at least periodically or more preferably constantly, to correct any variations in frequency of the first succession of resistant torque peaks.

3. Method according to any one of the preceding claims, wherein said increase in rotation speed has an approximately step-like trend with a rising edge preceding a predicted instant of a future peak of resistant torque and a falling edge in a neighborhood of the same expected time instant of the future peak of resistant torque.

4. Method according to any one of the preceding claims, wherein according to said first process, an acquired peak is discarded if a relative intensity is lower than a predetermined intensity threshold and/or when a period calculated with respect to an immediately following peak results out of a predetermined range of periods.

5. Method according to any one of the preceding claims, further comprising a preliminary step (CK0) of verifying the presence of at least one activation signal
- generated by the recognition of the connection of a pre-ordered operating machine (OM), through an intercommunication of the operating machine with a vehicle processing unit (VCU) via a vehicle data network and/or
- manually generated by the operator through a man-machine interface.

6. Method according to any one of the preceding claims, comprising a further step or a further process of inhibiting the execution of the second process (B2), when the presence of an inhibition signal is detected, wherein said inhibition signal is caused by one of:
- variation of the vehicle speed request,
- disconnection of the PTO,
- action on the service brake pedal,
- steering beyond a predetermined angle.

7. Method according to claim 6, wherein said further step or process includes resetting the calculated average period value (Step S3).

8. Computer program comprising program coding means designed to cause the processing unit of the agricultural vehicle according to claim 10 to perform all the steps of any one of claims 1 to 7.

9. Computer readable means comprising a recorded computer program according to claim 8

10. Agricultural vehicle (AV) comprising an engine (E) arranged to move the agricultural vehicle and to drive a PTO and a processing unit (VCU) configured to acquire a signal representative of an engine rotation speed and/or torque resistance applied to the PTO by an operating machine, wherein the processing unit is configured to control the rotation speed of the engine and to perform all the steps of any one of claims 1 to 7.

11. Vehicle according to claim 10, wherein said processing unit is configured to perform all the steps of any one of claims 1 to 7, exclusively on the basis of a motor rotation speed and/or applied resistive torque signal to the PTO.

12. Vehicle according to claim 10 or 12, wherein said processing unit is configured to perform all the steps of any one of claims 1 to 7 after detecting, via a vehicular data network, an operating connection of a baler to the agricultural vehicle.

## Patentansprüche

1. Motorsteuerungsverfahren eines landwirtschaftlichen Fahrzeugs, wobei eine Ballenpresse mit einer Zapfwelle des Fahrzeugs verbunden ist, wobei das Verfahren umfasst
- einen ersten Prozess (B1) zur Erfassung von Widerstandsmomentspitzen, die an eine Zapfwelle des landwirtschaftlichen Fahrzeugs angelegt werden, und Berechnung einer ersten Abfolge zukünftiger Spitzen des Widerstandsmoments,
- einen zweiten Prozess (B2) zum zumindest teilweisen Kompensieren der ersten zukünftigen Abfolge von Spitzen des Widerstandsmoments mittels einer zweiten zukünftigen Abfolge von 5 Anforderungen für eine temporäre Drehzahlerhöhung des Motors (E), wobei die zweite zukünftige Abfolge etwa synchron bezüglich der ersten zukünftigen Abfolge ist; wobei der erste Prozess (B1) die folgenden Schritte umfasst:
- (Prüfung Ck1) Erkennung eines plötzlichen Verlangsamungsereignisses der Antriebsmaschine (oder des landwirtschaftlichen Fahrzeugs AV) in Bezug auf eine durchschnittliche Drehzahl (oder eine durchschnittliche Fahrzeuggeschwindigkeit), solange dieses Ereignis nicht auftritt, wiederholt sich dieser Erkennungsschritt (CK1) weiter selbst (CK1 = N), während, wenn eine Spitze des Widerstandsmoments erkannt wird (CK1 = Y), der Zyklus verlassen wird und unmittelbar danach
- (Schritt S1) Speichern des Zeitpunkts, an dem die erste Spitze des Widerstandsmoments erkannt wird, dann
- (Prüfung Ck2) Ausführung der Verifikation, ob es sich um eine erste Spitze handelt, im positiven Fall kehrt sie zur Erkennung (CK1) einer weiteren Spitze zurück, während im negativen Fall,
gleichzeitige Ausführung von
- (Schritt S3) Berechnung einer gleitenden Durchschnittsperiode zwischen den Spitzen und Rückkehr zur Erkennung (CK1) einer weiteren Spitze und
- der zweite Prozess (B2), wobei
der zweite Prozess (B2) umfasst
- (Schritt S4) Initialisierung eines Zeitintervall-Countdowns gleich der zuvor berechneten mittleren Periode reduziert um einen vorbestimmten Zeitvorlauf (TM),
- (CKS-Schritt) Warten darauf, dass der Zähler bei Null ankommt, wonach (Schritt S6) Erzeugen einer temporären Anforderung (SC) einer Erhöhung der Drehzahl an die Antriebsmaschine und Rückkehr zur Erkennung (CK1) einer weiteren Spitze.

2. Verfahren nach Anspruch 1, wobei während des zweiten Prozesses (B2) der erste Prozess (B1) aktiv bleibt, zumindest periodisch oder mehr bevorzugt konstant, um jegliche Variationen in der Frequenz der ersten Abfolge von Widerstandsmomentspitzen zu korrigieren.

3. Verfahren nach einem der vorstehenden Ansprüche, wobei die Erhöhung der Drehzahl einen etwa stufenartigen Verlauf mit einer ansteigenden Flanke vor einem vorhergesagten Zeitpunkt einer zukünftigen Spitze des Widerstandsmoments und einer abfallenden Flanke in einer Nachbarschaft desselben erwarteten Zeitpunkts der zukünftigen Spitze des Widerstandsmoments aufweist.

4. Verfahren nach einem der vorstehenden Ansprüche, wobei gemäß dem ersten Prozess eine erfasste Spitze verworfen wird, wenn eine relative Intensität niedriger als ein vorbestimmter Intensitätsschwellenwert ist und/oder wenn eine in Bezug auf eine unmittelbar folgende Spitze berechnete Periode außerhalb eines vorbestimmten Periodenbereichs liegt.

5. Verfahren nach einem der vorstehenden Ansprüche, ferner umfassend einen vorläufigen Schritt (CK0) des Verifizierens des Vorhandenseins von mindestens einem Aktivierungssignal
- erzeugt durch die Erkennung der Verbindung einer vorbestellten Betriebsmaschine (OM), durch eine Interkommunikation der Betriebsmaschine mit einer Fahrzeugverarbeitungseinheit (VCU) über ein Fahrzeugdatennetzwerk und/oder
- manuell durch den Bediener über eine Mensch-Maschine-Schnittstelle erzeugt.

6. Verfahren nach einem der vorstehenden Ansprüche, umfassend einen weiteren Schritt oder einen weiteren Prozess des Hemmens der Ausführung des zweiten Prozesses (B2), wenn das Vorhandensein eines Hemmungssignals erkannt wird, wobei das Hemmungssignal verursacht wird durch eines von:
- Variation der Fahrzeuggeschwindigkeitsanforderung,
- Trennung der Zapfwelle,
- Betätigung des Betriebsbremspedals,
- Lenkung über einen vorbestimmten Winkel hinaus.

7. Verfahren nach Anspruch 6, wobei der weitere Schritt oder Prozess das Zurücksetzen des berechneten durchschnittlichen Periodenwerts (Schritt S3) umfasst.

8. Computerprogramm, das Programmcodiermittel umfasst, die dazu ausgelegt sind, die Verarbeitungseinheit des landwirtschaftlichen Fahrzeugs nach Anspruch 10 zu veranlassen, alle Schritte nach einem der Ansprüche 1 bis 7 durchzuführen.

9. Computerlesbare Mittel, die ein aufgezeichnetes Computerprogramm nach Anspruch 8 umfassen.

10. Landwirtschaftliches Fahrzeug (AV), umfassend einen Motor (E), der angeordnet ist, um das landwirtschaftliche Fahrzeug zu bewegen und eine Zapfwelle und eine Verarbeitungseinheit (VCU) anzutreiben, die konfiguriert ist, um ein Signal zu erfassen, das repräsentativ für eine Motordrehzahl und/oder einen Momentwiderstand ist, der an die Zapfwelle durch eine Arbeitsmaschine angelegt wird, wobei die Verarbeitungseinheit konfiguriert ist, um die Drehzahl des Motors zu steuern und alle Schritte eines der Ansprüche 1 bis 7 durchzuführen.

11. Fahrzeug nach Anspruch 10, wobei die Verarbeitungseinheit konfiguriert ist, um alle Schritte nach einem der Ansprüche 1 bis 7 durchzuführen, ausschließlich auf der Basis eines Motordrehzahl- und/oder eines angewandten Widerstandsmomentsignals an die Zapfwelle.

12. Fahrzeug nach Anspruch 10 oder 12, wobei die Verarbeitungseinheit konfiguriert ist, um alle Schritte nach einem der Ansprüche 1 bis 7 durchzuführen, nachdem über ein Fahrzeugdatennetzwerk eine Betriebsverbindung einer Ballenpresse mit dem landwirtschaftlichen Fahrzeug erkannt wurde.

## Revendications

1. Procédé de commande de moteur d'un véhicule agricole, dans lequel une presse à balles est reliée à une prise de force du véhicule, le procédé comprenant
- un premier processus (B1) pour détecter les pics de couple résistant appliqués à une prise de force du véhicule agricole et calculer une première succession de pics futurs de couple résistant,
- un deuxième processus (B2) permettant de compenser, au moins partiellement, ladite première succession future de pics de couple résistant, au moyen d'une deuxième succession future de 5 demandes d'augmentation temporaire de la vitesse de rotation du moteur (E), dans lequel ladite deuxième succession future est environ synchrone par rapport à ladite première succession future ; dans lequel le premier processus (B1) comprend les étapes suivantes :
- (vérification Ck1) reconnaissance d'un événement de ralentissement soudain du moteur principal (ou du véhicule agricole VA) par rapport à une vitesse de rotation moyenne (ou à une vitesse moyenne de véhicule), tant que cet événement ne se produit pas, cette étape de reconnaissance (CK1) continue à tourner (CK1 = N) sur elle-même, tandis que lorsqu'un pic de couple résistant est reconnu (CK1 = Y) le cycle est quitté et immédiatement après
- (étape S1) stockage du temps pendant lequel le premier pic de couple résistant est reconnu, puis
- (vérification Ck2) exécution de la vérification de s'il s'agit d'un premier pic, dans le cas positif il revient à la reconnaissance (CK1) d'un autre pic, tandis que dans le cas négatif,
l'exécution simultanée
- (étape S3) du calcul d'une période moyenne mobile entre les pics et du retour à la reconnaissance (CK1) d'un autre pic ; et
- du second processus (B2), dans lequel
ledit second processus (B2) comporte
- (étape S4) l'initialisation d'un compte à rebours d'intervalle de temps égal à la période moyenne précédemment calculée réduite d'une avance temporelle (TM) prédéterminée,
- (étape CKS) l'attente de l'arrivée du compteur à zéro, après quoi,
(étape S6) la génération d'une demande temporaire (SC) d'une augmentation de la vitesse de rotation vers le moteur principal et le retour à la reconnaissance (CK1) d'un pic supplémentaire.

2. Procédé selon la revendication 1, dans lequel, pendant ledit second processus (B2), ledit premier processus (B1) reste actif, au moins périodiquement ou plus préférablement constamment, pour corriger de quelconques variations de fréquence de la première succession de pics de couple résistant.

3. Procédé selon l'une quelconque des revendications précédentes, dans lequel ladite augmentation de la vitesse de rotation a une tendance approximativement par étapes avec un front ascendant précédant un instant prédit d'un futur pic de couple résistant et un front descendant dans un voisinage du même instant prévu du futur pic de couple résistant.

4. Procédé selon l'une quelconque des revendications précédentes, dans lequel, selon ledit premier processus, un pic acquis est écarté si une intensité relative est inférieure à un seuil d'intensité prédéterminé et/ou lorsqu'une période calculée par rapport à un pic qui suit immédiatement se produit hors d'une plage prédéterminée de périodes.

5. Procédé selon l'une quelconque des revendications précédentes, comprenant en outre une étape préliminaire (CKO) de vérification de la présence d'au moins un signal d'activation
- généré par la reconnaissance de la connexion d'une machine d'exploitation (OM) précommandée, par le biais d'une intercommunication de la machine d'exploitation avec une unité de traitement de véhicule (VCU) par l'intermédiaire d'un réseau de données de véhicule et/ou
- généré manuellement par l'opérateur via une interface homme-machine.

6. Procédé selon l'une quelconque des revendications précédentes, comprenant une étape supplémentaire ou un processus supplémentaire d'inhibition de l'exécution du second processus (B2), lorsque la présence d'un signal d'inhibition est détectée, dans lequel ledit signal d'inhibition est provoqué par l'une parmi :
- la variation de la demande de vitesse du véhicule,
- la déconnexion de la prise de force,
- l'action sur la pédale de frein de service,
- l'orientation au-delà d'un angle prédéterminé.

7. Procédé selon la revendication 6, dans lequel ladite étape ou ledit processus supplémentaire comporte la réinitialisation de la valeur de période moyenne calculée (étape S3).

8. Programme informatique comprenant un moyen de codage de programme conçu pour amener l'unité de traitement du véhicule agricole selon la revendication 10 à réaliser toutes les étapes selon l'une quelconque des revendications 1 à 7.

9. Moyen lisible par ordinateur comprenant un programme informatique enregistré selon la revendication 8.

10. Véhicule agricole (VA) comprenant un moteur (E) conçu pour déplacer le véhicule agricole et pour entraîner une prise de force et une unité de traitement (VCU) configurée pour acquérir un signal représentant une vitesse de rotation du moteur et/ou une résistance de couple appliqués à la prise de force par une machine d'exploitation, dans lequel l'unité de traitement est configurée pour commander la vitesse de rotation du moteur et pour effectuer toutes les étapes selon l'une quelconque des revendications 1 à 7.

11. Véhicule selon la revendication 10, dans lequel ladite unité de traitement est configurée pour réaliser toutes les étapes selon l'une quelconque des revendications 1 à 7, exclusivement sur la base d'une vitesse de rotation de moteur et/ou d'un signal de couple résistif appliqué à la prise de force.

12. Véhicule selon la revendication 10 ou 12, dans lequel ladite unité de traitement est configurée pour mettre en œuvre toutes les étapes selon l'une quelconque des revendications 1 à 7 après avoir détecté, par l'intermédiaire d'un réseau de données de véhicule, une connexion de fonctionnement d'une presse à balles au véhicule agricole.
